# EUROPEAN PATENT SPECIFICATION

(11) **EP 4 326 526 B1**
(45) Date of publication and mention of the grant of the patent: **18.03.2026**
(21) Application number: 22724019.9
(22) Date of filing: 20.04.2022
(51) Int. Cl.: B29C 53/66, B29C 64/153, B29C 70/24, B29C 53/80

(54) **PROCESS AND SYSTEMS FOR WINDING A FILAMENT AROUND A WINDING SUPPORT**
VERFAHREN UND SYSTEME ZUM WICKELN EINES FILAMENTS UM EINEN WICKELTRÄGER
PROCÉDÉ ET SYSTÈMES D'ENROULEMENT D'UN FILAMENT AUTOUR D'UN SUPPORT D'ENROULEMENT

(30) Priority: 21.04.2021 LU 500070
(43) Date of publication of application: 28.02.2024
(73) Proprietor: PLASTIC OMNIUM NEW ENERGIES FRANCE, 69007 Lyon (FR)
(72) Inventor: BEYENS, Filip, 1130 BRUXELLES (BE); NOUWEN, Geert, 1130 BRUXELLES (BE)
(74) Representative: LLR
(86) International application number: PCT/EP2022/060413
(87) International publication number: WO 2022/223614

(56) References cited:
- EP-A1- 2 060 384
- US-A- 4 010 906
- US-A1- 2005 247 396

## Description

The invention relates to high pressure vessels for vehicles. More precisely, the invention relates to a process for winding a filament around a winding support and systems for winding a filament around a winding support.

High pressure vessels for vehicle generally comprise a hollow container, like a bladder under the form of a mandrel, having a general cylindrical shape with dome-shaped longitudinal ends and made of plastic material, such material being chosen for being lightweight and cheap to produce, or other material. This container is intended for storing gas under pressure, for example dihydrogen, to be used by the vehicle equipped with the pressure vessel for diverse functions, such as source of power. The gas under pressure exerts strong constraints on the inner surface of the container which may damage the integrity of the container and cause hazardous leakage, especially with combustible gas like dihydrogen.

To improve the mechanical properties of the container, it is known to wind a filament made of a reinforcing fibre, for example carbon fibre, by the means of a feeding device all around the container thus forming a winding support. The filament is embedded in a resin to facilitate the winding and to make sure each piece of the outer surface of the winding support is covered. This winding operation is necessary but takes quite a long time and it is desired to reduce as much as possible the duration of this operation to not overly lengthen the manufacturing time of the pressure vessel. The document US2019344512A1 discloses a winding system and a winding process implemented by said winding system which involve the use of two or more feeding devices for speeding up the winding operation.

This document proposes a somewhat fast process for winding the filament around the winding support, yet there is still room for improvement. But particularly, the use of multiple feeding devices may render the programming of the winding pattern quite complicated or complex to implement. EP 2 060 384 A1 discloses a process for winding filaments around a winding support having a general cylindrical shape with dome-shaped longitudinal ends, the winding support being held by a holding device fixed to a base, the process comprising steps, occurring in synchronization, consisting of feeding a filament, by means of feeding devices, towards the winding support, rotating the winding support around its axis with respect to the base and radially moving the feeding devices.

In the view of above, there exists a need for optimizing the duration of the winding operation without complexifying the command of the feeding device or devices when implementing the winding operation.

To this end, it is provided according to the invention a process for winding a filament around a winding support having a general cylindrical shape with dome-shaped longitudinal ends and having a roll axis, the winding support being held by a holding device fixed to a base, the process comprising steps, occurring in synchronization, consisting of:
(i) feeding a filament, by means of at least one primary feeding device and at least one secondary feeding device, towards the winding support,
(ii) translating the at least one primary feeding device and the at least one secondary feeding device with respect to the base in parallel to the roll axis of the winding support,
(iii) rotating the winding support around its roll axis with respect to the base,
   wherein the movement of the at least one primary feeding device and the at least one secondary feeding device are symmetric one of another.
(iv) moving the at least one primary feeding device and the at least one secondary feeding device along the pitch axis of the winding support with respect to the base.

By enabling the movement of the at least one primary feeding device and the at least one secondary feeding device to be symmetric one of another, it is only necessary to determine the pathing of either one of the at least one primary feeding device and the at least one secondary feeding device, the other one being deducible by symmetry. Therefore, it is possible to obtain a fast winding process, enabled by the presence of multiple feeding devices, and to both simplify and optimize the implementation of the winding process with reference to the one of the prior art discussed above. It also improves the homogeneity of the mechanical resistance of the winding support and the reproducibility of the winding process.

By the mean of step (iv), the movement in space is coordinated with the deposition path of the filament in such a way that the instantaneous stress and strain induced on the filament is minimized, by moving relatively the winding support and the feeding devices, when wrapping around the shorter dome-shaped longitudinal ends of the winding support and when moving close to the winding support when wrapping around the central cylindrical part of the winding support, which typically takes up more filament. This also allows for several other improvements of the invention: taking into account the increasing thickness of the winding support during the winding operation due to the layers of filament being laid, better compensation of the variations in filament application speed, by for example pulling the filament with the winding support during its application; increased lay-off accuracy with the possibility to place the feeding device as close as possible to the winding support; and more stable positioning of the filament in space can be configured. Higher precision of the filament winding is possible the closer the feeding devices are located with respect to the winding support. The increased accuracy, precision and stability improve the reproducibility of the process.

By the expression "filament", it is meant continuous fiber tows, preferably carbon fibers, glass fibers or aramid fibers, impregnated with a liquid matrix so as to form a composite material. There are two main families of composite materials, depending on the type of matrix used. The thermoset composites and the thermoplastic composites, which are formed with a thermoset resin or a thermoplastic polymer as matrix.

A thermoset resin is formed by mixing two or more reactive components forming a reactive thermoset precursor, which react upon exposure to curing conditions (e.g., heat, UV or other radiations, or simply by contacting them with one another, etc.) to form the thermoset resin. The thermoset matrix must be fully cured to yield high performance composites. Once cured, the thermoset resin is solid and cannot be further processed or reshaped as the resin is unable to flow anymore. Examples of thermoset resins include unsaturated polyester, epoxy, vinyl ester, polyurea, isocyanurate, and polyurethane resins. It is possible to produce thermoset prepregs made of fibers impregnated with a reactive resin which has been only partially cured to make it tacky, but still soft. The prepregs can be stored and later further processed under pressure by heating or exposing the resin to UV to complete curing and consolidating the prepregs.

A thermoplastic polymer can pass from solid state (or non-flowable state) to a liquid state (or flowable state) and reverse by increasing and lowering the temperature, respectively. In case of semicrystalline polymers, lowering the temperature of the thermoplastic drives the formation of crystals and the solidification of the thermoplastic. Inversely, heating a semi-crystalline polymer above the melting temperature thereof melts the crystals and the thermoplastic can flow. Examples of semi-crystalline thermoplastics include polyether ketones such as PEEK, PEKK, PEKKEK, polyamides, such as PA6, PA66, PA10, PA12, polyolefins such as PE, PP, and the like. Amorphous thermoplastics do not form crystals and do not have a melting temperature. The amorphous thermoplastics solidify or become flowable depending on whether the material temperature is below or above the glass transition temperature thereof. Examples of amorphous thermoplastics include PEI, PSU, PES, PC, PS, TPU, and the like. Both semi-crystalline and amorphous thermoplastics can therefore be reshaped by heating them above their melting or glass transition temperatures and frozen into their new shape by lowering the temperature accordingly. Even though not strictly correct from a physical point of view, for sake of simplicity, both semi-crystalline and amorphous thermoplastics in a liquid state are herein referred to as a "thermoplastic melt".

According to a first embodiment of the invention, the movement of the at least one primary feeding device and the at least one secondary feeding device are symmetric one of another with respect to the roll axis of the winding support.

According to a second embodiment of the invention, the movement of the at least one primary feeding device and the at least one secondary feeding device are symmetric one of another with respect to a centre of volume of the winding support.

According to a third embodiment of the invention, the movement of the at least one primary feeding device and the at least one secondary feeding device are symmetric one of another with respect to a plane perpendicular to the roll axis of the winding support and passing through the centre of volume of the winding support.

The invention thus provides great flexibility in its implementation, as the symmetry between the movement of the at least one primary feeding device and the at least one secondary feeding device may be chosen among different configurations. In other words, the invention is applicable to various types of winding systems, notably systems which can only enable so many types of symmetry between the feeding devices, making it easy to implement.

Preferably, in the first embodiment of the invention, during step (ii) the at least one primary feeding device and the at least one secondary feeding device are translated with respect to the base in parallel to the roll axis of the winding support in a primary direction, and wherein the process further comprises a step, occurring in synchronisation with the other steps, consisting of:
(v) translating the winding support along its roll axis with respect to the base in a secondary direction opposed to the primary direction.

By adding another movement, formed by the translation of the winding support along its roll axis, it is possible to create new pathing for laying the filament on the winding support and speed up even more the winding process. Specifically, by translating the winding support in a direction opposed the direction of translation of the feeding devices, a contra-motion of the winding support with respect to the feeding devices is generated, which increases the relative speed of the winding support with respect to the feeding devices, and thus increases the filament laying speed.

Advantageously, the process involves several primary feeding devices, preferably regularly arranged around the roll axis of the winding support, and several secondary feeding devices, preferably regularly arranged around the roll axis of the winding support, the number of primary feeding devices being equal to the number of secondary feeding devices.

The additional feeding devices allows to multiply the winding speed. In the case of two primary feeding devices and two secondary feeding devices, winding speed is multiplied by up to 2 and the winding process is not complexified that much, making it almost as easy to implement.

It is also provided according to the invention a process for manufacturing a pressure vessel, the process comprising the process for winding a filament around a winding support as presented above.

It is also provided according to the invention a system for winding a filament on a winding support having a general cylindrical shape with dome-shaped longitudinal ends and having a roll axis, the system comprising:
- a base,
- a holding device, connected to the base, configured to hold the winding support such that the winding support is able to rotate around its roll axis with respect to the base and to translate along its roll axis with respect to the base, and
- at least one primary feeding device and at least one secondary feeding device arranged to feed a filament towards the holding device,
the system being configured to move the at least one primary feeding device and the at least one secondary feeding device in symmetry one of another.

According to the first embodiment of the invention, the movement of the at least one primary feeding device and the at least one secondary feeding device are symmetric one of another with respect to the roll axis of the winding support.

According to the second embodiment of the invention, the movement of the at least one primary feeding device and the at least one secondary feeding device are symmetric one of another with respect to a centre of volume of the winding support.

According to the third embodiment of the invention, the movement of the at least one primary feeding device and the at least one secondary feeding device are symmetric one of another with respect to a plane perpendicular to the roll axis of the winding support and passing through the centre of volume of the winding support.

The invention thus provides great flexibility in its implementation, as the symmetry between the movement of the at least one primary feeding device and the at least one secondary feeding device may be chosen among different configurations. In other words, the invention is applicable to various types of winding systems, notably systems which can only enable so many types of symmetry between the feeding devices, making it easy to implement.

Advantageously, the system is configured to move the at least one primary feeding device and the at least one secondary feeding device along the pitch axis of the winding support with respect to the base.

This allows the implementation of the winding process as described above where step (v) occurs.

Advantageously, the system comprises several primary feeding devices, preferably regularly arranged around the roll axis of the winding support, and several secondary feeding devices, preferably regularly arranged around the roll axis of the winding support, the number of primary feeding devices being equal to the number of secondary feeding devices.

Advantageously, the system comprises a command device, common to both the holding device and the feeding devices, configured to command, in synchronization, the movements of the holding device, the movement of the feeding devices and take up speed of the filament that is applied by the feeding devices.

The command of all the elements of the system is thus centralized by the only command device, which allows an easier synchronization of the steps of the winding process.

Advantageously, the primary and secondary feeding devices each comprise a filament resin impregnation unit.

It is also provided according to the invention a non-transitory computer-readable medium comprising instructions which, when executed by a processor, cause the processor to perform a process as presented above.

### Brief description of the figures

Other features and advantages would appear by reading the following description, given as an illustrative and non-restrictive example, and with the annexed drawings in which:
- figure 1 is a three-dimensional view of a system for winding a filament on a winding support according to a first embodiment of the invention,
- figure 2 illustrates a winding pattern permitted by a winding process according to the invention carried out by the system of figure 1,
- figure 3 is a three-dimensional view of a system for winding a filament on a winding support according to a second embodiment of the invention, and
- figure 4 is a three-dimensional view of a system for winding a filament on a winding support according to a third embodiment of the invention.

### Detailed description

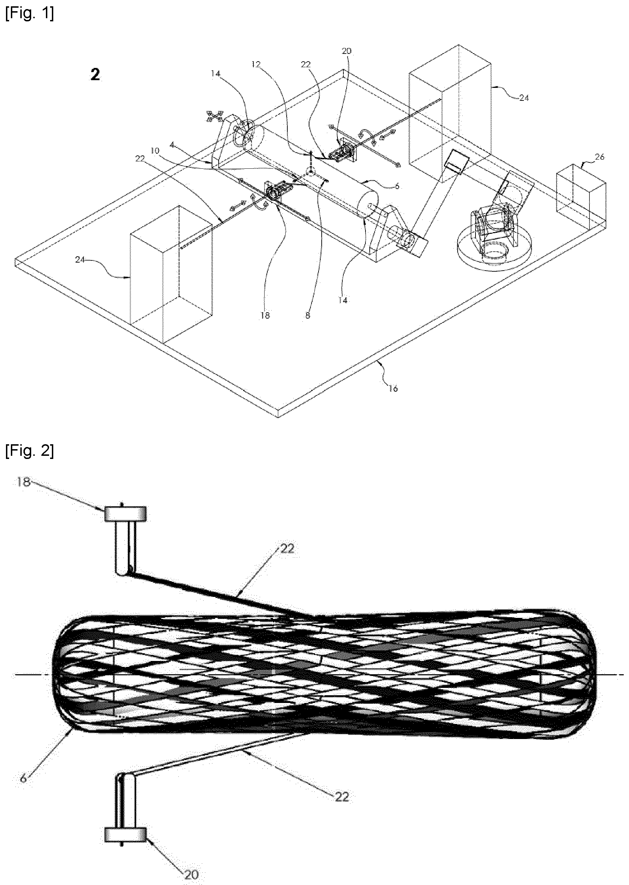

Figure 1 represents a system 2 for winding a filament on a winding support according to a first embodiment of the invention. In the following description, this system 2 will be referenced as "winding system".

The winding system 2 comprises a holding device 4 configured to hold a winding support 6 which is to be wound by carrying out a winding process according to the invention. The winding support 6 is intended to form part of a high pressure vessel for a vehicle. By the expression "high pressure vessel", it is meant to mean a pressure vessel intended for storing gas under pressure able to withstand an internal pressure going up to 350 bar. As such, the winding support 6 may be a bladder under the form of a mandrel. The winding support 6 has a general cylindrical shape defining a longitudinal axis of the winding support 6.

By considering an origin formed by the center of volume of the winding support 6, we can define a three-dimensional coordinate system comprising three axes, i.e., a roll axis 8, a pitch axis 10 and a yaw axis 12, by reference to the name of the principal axes of an aircraft defined for example in the manual "Aerodynamics" by Clancy, L.J., Pitman Publishing Limited (1975), ISBN 0-273-01120-0, Section 16.6. The roll axis 8 is colinear to the longitudinal axis and pass through the center of volume of the winding support 6. The yaw axis 12 is vertical and passes through the center of volume of the winding support 6. The pitch axis 10 is perpendicular to the roll axis 8 and passes through the center of volume of the winding support 6. The center of volume of the winding support 6, the roll axis 8, the pitch axis 10 and the yaw axis 12 are represented on figure 1.

The winding support 6 has a central portion having a cylindrical shape and two dome-shaped longitudinal ends 14 located at opposing sides of the central portion relative to the roll axis 8. The winding support 6 comprises at least one boss located at one of the dome-shaped longitudinal ends 14. Preferably, the winding support 6 comprises two bosses located at both of the dome-shaped longitudinal ends 14.

The holding device 4 comprises an articulated arm connected to a base 16 of the winding system 2. The winding support 6 is held by the articulated arm by clamping the boss, one of the bosses or the bosses of the winding support 6 in such a manner that the winding support 6 is able to rotate around its roll axis 8. Here, the articulated arm may be formed by a six-axis robot or a Cartesian coordinate robot, but it is possible to replace these types of robot by any other suitable means of moving the holding device.

The winding system 2 comprises at least one primary feeding device 18 and at least one secondary feeding device 20 configured to feed a filament 22 towards the holding device 4 and the winding support 6. The filament 22 is made of reinforcing fibres embedded in a resin shaped as a band to be wound all around the winding support 6. The at least one primary feeding device 18 and the at least one secondary device 20 are each configured to move in parallel to the roll axis 8 of the winding support 6 and in parallel to the pitch axis 10 of the winding support 6.

In this embodiment of the winding system 2, the movement of the at least one primary feeding device 18 and the at least one secondary feeding device 20 are symmetric one of another with respect to the roll axis 8 of the winding support 6. For example, when the at least one primary feeding device 18 translates along the roll axis 8 at a certain speed in a set direction, the at least one secondary feeding device 20 also translates along the roll axis 8 at the same speed and in the same direction.

Here, the winding system 2 comprises one primary feeding device 18 and one secondary feeding device 20. According to a variant of the invention, more primary and secondary feeding devices may be provided, the number of primary feeding devices being equal to the number of secondary feeding devices. Preferably, the primary feeding devices are regularly arranged around the roll axis of the winding support and the secondary feeding devices are regularly arranged around the roll axis of the winding support. Good results on winding speed, reproducibility and easy implementation have been observed with a winding system comprising two primary feeding devices and two secondary feeding devices.

Each of the primary and secondary feeding devices 18, 20 comprises a winding eye through which the filament 22 pass in direction of the winding support 6. The filament 22 is continuously provided by a feeding station 24, connected to the base 16, equipped with filament material unwinders (not represented) and/or a filament resin impregnation system (not represented) in case in-line impregnation must be provided. Here, the primary and secondary feeding devices 18, 20 each comprise a filament resin impregnation unit (not represented).

Each of the primary and secondary feeding device 18, 20 may be equipped with actuators and brakes configured to speed up or slow down the quantity of filament 22 fed to the winding support 6 during the winding. The feeding station 24 may also be equipped with such actuators and brakes.

The winding system 2 comprises a command device 26 common to both the holding device 4 and primary and secondary feeding devices 18, 20, configured to command, in synchronization, the movements of the holding device 4, the movement of the primary and secondary feeding devices 18, 20 and take up speed of the filament 22 that is applied by the primary and secondary feeding devices 18, 20.

The command device 26 is suitable for implementing a winding process comprising the steps, occurring in synchronization by the means of the command device 26, consisting of:
(i) feeding the filament 22, by means of the primary feeding device 18 and the secondary feeding device 20, towards the winding support 6,
(ii) translating the primary feeding device 18 and the secondary feeding device 20 with respect to the base 16 in parallel to the roll axis 8 of the winding support 6,
(iii) rotating the winding support 6 around its roll axis 8 with respect to the base 16,
wherein the movement of the at least one primary feeding device 18 and the at least one secondary feeding device 20 are symmetric one of another.

According to the invention, to better take into account the geometry of the winding support 6 and its increasing thickness during the winding process, the command device 26 may also implement the following step, occurring in synchronization with the steps above, consisting of:
(iv) moving the primary feeding device 18 and the secondary feeding device 20 along the pitch axis 10 of the winding support 6 with respect to the base 16.

To decrease the winding process duration, according to the first embodiment of the invention, the command device 26 may also implement the following step, occurring in synchronization with the steps above, consisting of:
(v) translating the winding support 6 along its roll axis 8 with respect to the base 16 in a direction opposed to the direction of translation of the feeding devices 18, 20 in parallel to the roll axis 8.

The winding process allows different types of winding patterns. Figure 2 illustrates a preferred implementation of the winding process in which the filament 22 is wound around the winding support 6 according to a low angle helical winding. The filament 22 is laid with an angle relative to the roll axis 8 of the winding support 6 lower than 20°.

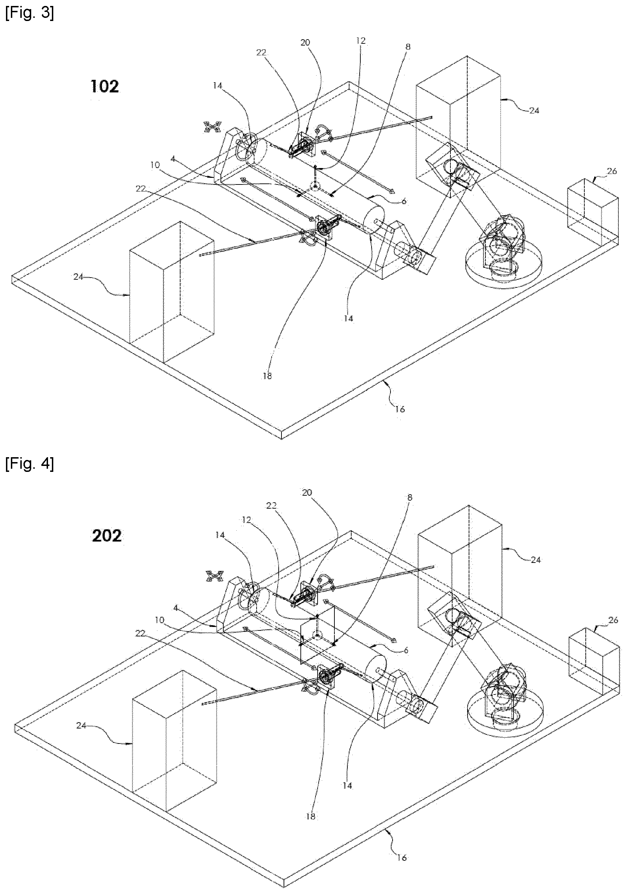

Figure 3 represents a winding system 102 for winding a filament on a winding support according to a second embodiment of the invention. It differs from the winding system of the first embodiment in that the movement of the at least one primary feeding device 18 and the at least one secondary feeding device 20 are symmetric one of another with respect to the centre of volume of the winding support 6. All the other features of the feeding system of the first embodiment are transposable to the winding system 102.

Figure 4 represents a winding system 202 for winding a filament on a winding support according to a third embodiment of the invention. It differs from the winding system of the first and second embodiments in that the movement of the at least one primary feeding device 18 and the at least one secondary feeding device 20 are symmetric one of another with respect to a plane perpendicular to the roll axis 8 of the winding support 6 and passing through the centre of volume of the winding support 6. All the other features of the feeding system of the first and second embodiments are transposable to the winding system 202.

The here-above embodiments are illustrative and not restrictive embodiments. Obviously, many modifications and variations of the present invention are possible in the light of the above teachings without deviating from its inventive concept as defined in the appended claims.

### Numerical references

2; 102; 202: winding system
4: holding device
6: winding support
8: roll axis of the winding support
10: pitch axis of the winding support
12: yaw axis of the winding support
14: dome-shaped ends of the winding support
16: base
18: primary feeding device
20: secondary feeding device
22: filament
24: feeding station
26: command device

## Claims

1. Process for winding a filament (22) around a winding support (6) having a general cylindrical shape with dome-shaped longitudinal ends and having a roll axis (8), the winding support (6) being held by a holding device (4) fixed to a base (16), the process comprising steps, occurring in synchronization, consisting of:
(i) feeding a filament (22), by means of at least one primary feeding device (18) and at least one secondary feeding device (20), towards the winding support (6),
(ii) translating the at least one primary feeding device (18) and the at least one secondary feeding device (20) with respect to the base (16) in parallel to the roll axis (8) of the winding support (6),
(iii) rotating the winding support (6) around its roll axis (8) with respect to the base (16),
(iv) moving the at least one primary feeding device (18) and the at least one secondary feeding device (20) along the pitch axis (10) of the winding support (6) with respect to the base (16),
wherein the movement of the at least one primary feeding device (18) and the at least one secondary feeding device (20) are symmetric one of another.

2. Process according to claim 1, wherein the movement of the at least one primary feeding device (18) and the at least one secondary feeding device (20) are symmetric one of another with respect to the roll axis (8) of the winding support (6).

3. Process according to claim 2, wherein during step (ii) the at least one primary feeding device (18) and the at least one secondary feeding device (20) are translated with respect to the base (16) in parallel to the roll axis (8) of the winding support (6) in a primary direction, and wherein the process further comprises a step, occurring in synchronisation with the other steps, consisting of:
(v) translating the winding support (6) along its roll axis (8) with respect to the base (16) in a secondary direction opposed to the primary direction.

4. Process according to claim 1, wherein the movement of the at least one primary feeding device (18) and the at least one secondary feeding device (20) are symmetric one of another with respect to a centre of volume of the winding support (16).

5. Process according to claim 1, wherein the movement of the at least one primary feeding device (18) and the at least one secondary feeding device (20) are symmetric one of another with respect to a plane perpendicular to the roll axis (8) of the winding support (6) and passing through the centre of volume of the winding support (6).

6. Process according to any of the preceding claims, comprising several primary feeding devices (18), preferably regularly arranged around the roll axis (8) of the winding support (6), and several secondary feeding devices (20), preferably regularly arranged around the roll axis (8) of the winding support (6), the number of primary feeding devices (18) being equal to the number of secondary feeding devices (20).

7. Process for manufacturing a pressure vessel, the process comprising the process for winding a filament around a winding support according to any of the preceding claims.

8. System (2; 102; 202) for winding a filament (22) on a winding support (6) having a general cylindrical shape with dome-shaped longitudinal ends and having a roll axis (8), the system comprising:
- a base (16),
- a holding device (4), connected to the base (16), configured to hold the winding support (6) such that the winding support (6) is able to rotate around its roll axis (8) with respect to the base (16) and to translate along its roll axis (8) with respect to the base (16), and
- at least one primary feeding device (18) and at least one secondary feeding device (20) arranged to feed a filament (22) towards the holding device (4),
the system being **characterized in that** it is configured to move the at least one primary feeding device (18) and the at least one secondary feeding device (20) in symmetry one of another and to move the at least one primary feeding device (18) and the at least one secondary feeding device (20) along the pitch axis (10) of the winding support (6) with respect to the base (16).

9. System (2) according to claim 8, wherein the movement of the at least one primary feeding device (18) and the at least one secondary feeding device (20) are symmetric one of another with respect to the roll axis (8) of the winding support (6).

10. System (102) according to claim 8, wherein the movement of the at least one primary feeding device (18) and the at least one secondary feeding device (20) are symmetric one of another with respect to a centre of volume of the winding support (6).

11. System (202) according to claim 8, wherein the movement of the at least one primary feeding device (18) and the at least one secondary feeding device (20) are symmetric one of another with respect to a plane perpendicular to the roll axis (8) of the winding support (6) and passing through the centre of volume of the winding support (6).

12. System (2; 102; 202) according to any of claims 8 to 11, comprising several primary feeding devices (18), preferably regularly arranged around the roll axis (8) of the winding support (6), and several secondary feeding devices (20), preferably regularly arranged around the roll axis (8) of the winding support (6), the number of primary feeding devices (18) being equal to the number of secondary feeding devices (20).

13. System (2; 102; 202) according to any of claims 8 to 12, comprising a command device (26), common to both the holding device (4) and the feeding devices (18, 20), configured to command, in synchronization, the movements of the holding device (4), the movement of the feeding devices (18, 20) and take up speed of the filament (22) that is applied by the feeding devices (18, 20).

14. System (2; 102; 202) according to any of claims 8 to 13, wherein the primary and secondary feeding devices (18, 20) each comprise a filament resin impregnation unit.

15. A non-transitory computer-readable medium comprising instructions which, when executed by a processor, cause the processor to perform the process according to any one of claims 1 to 7.

## Patentansprüche

1. Verfahren zum Wickeln eines Filaments (22) um einen Wickelträger (6) mit einer im Wesentlichen zylindrischen Form mit gewölbten Längsenden und einer Rollachse (8), wobei der Wickelträger (6) von einer an einer Basis (16) befestigten Haltevorrichtung (4) gehalten wird, wobei das Verfahren synchron ablaufende Schritte umfasst, bestehend aus:
(i) Zuführen eines Filaments (22) mittels mindestens einer primären Zuführvorrichtung (18) und mindestens einer sekundären Zuführvorrichtung (20) in Richtung des Wickelträgers (6),
(ii) Verschieben der mindestens einen primären Zuführvorrichtung (18) und der mindestens einen sekundären Zuführvorrichtung (20) in Bezug auf die Basis (16) parallel zur Rollachse (8) des Wickelträgers (6),
(iii) Drehen des Wickelträgers (6) um seine Rollachse (8) in Bezug auf die Basis (16),
(iv) Bewegen der mindestens einen primären Zuführvorrichtung (18) und der mindestens einen sekundären Zuführvorrichtung (20) entlang der Nicksachse (10) des Wickelträgers (6) relativ zur Basis (16),
wobei die Bewegung der mindestens einen primären Zuführvorrichtung (18) und der mindestens einen sekundären Zuführvorrichtung (20) symmetrisch zueinander sind.

2. Verfahren nach Anspruch 1, wobei die Bewegung der mindestens einen primären Zuführvorrichtung (18) und der mindestens einen sekundären Zuführvorrichtung (20) in Bezug auf die Rollachse (8) des Wickelträgers (6) symmetrisch zueinander sind.

3. Verfahren nach Anspruch 2, wobei während Schritt (ii) die mindestens eine primäre Zuführvorrichtung (18) und die mindestens eine sekundäre Zuführvorrichtung (20) in Bezug auf die Basis (16) parallel zur Rollachse (8) des Wickelträgers (6) in einer primären Richtung verschoben werden, und wobei das Verfahren ferner einen Schritt umfasst, der synchron mit den anderen Schritten erfolgt und aus Folgendem besteht:
(v) Verschieben des Wickelträgers (6) entlang seiner Rollachse (8) relativ zur Basis (16) in einer zur Primärrichtung entgegengesetzten Sekundärrichtung.

4. Verfahren nach Anspruch 1, wobei die Bewegung der mindestens einen primären Zuführvorrichtung (18) und der mindestens einen sekundären Zuführvorrichtung (20) in Bezug auf einen Volumenmittelpunkt des Wickelträgers (6) symmetrisch zueinander sind.

5. Verfahren nach Anspruch 1, wobei die Bewegung der mindestens einen primären Zuführvorrichtung (18) und der mindestens einen sekundären Zuführvorrichtung (20) symmetrisch zueinander in Bezug auf eine Ebene sind, die senkrecht zur Rollachse (8) des Wickelträgers (6) steht und durch den Volumenmittelpunkt des Wickelträgers (6) verläuft.

6. Verfahren nach einem der vorstehenden Ansprüche, umfassend mehrere primäre Zuführvorrichtungen (18), die vorzugsweise regelmäßig um die Rollachse (8) des Wickelträgers (6) angeordnet sind, und mehrere sekundäre Zuführvorrichtungen (20), die vorzugsweise regelmäßig um die Rollachse (8) des Wickelträgers (6) angeordnet sind, wobei die Anzahl der primären Zuführvorrichtungen (18) gleich der Anzahl der sekundären Zuführvorrichtungen (20) ist.

7. Verfahren zur Herstellung eines Druckbehälters, wobei das Verfahren das Verfahren zum Wickeln eines Filaments um einen Wickelträger nach einem der vorstehenden Ansprüche umfasst.

8. System (2; 102; 202) zum Wickeln eines Filaments (22) auf einen Wickelträger (6) mit einer im Wesentlichen zylindrischen Form mit kuppelförmigen Längsenden und einer Rollachse (8), wobei das System aufweist:
- eine Basis (16),
- eine Haltevorrichtung (4), die mit der Basis (16) verbunden ist und so konfiguriert ist, dass sie den Wickelträger (6) so hält, dass sich der Wickelträger (6) um seine Rollachse (8) in Bezug auf die Basis (16) drehen und entlang seiner Rollachse (8) in Bezug auf die Basis (16) verschieben kann, und
- mindestens eine primäre Zuführvorrichtung (18) und mindestens eine sekundäre Zuführvorrichtung (20), die so angeordnet sind, dass sie ein Filament (22) in Richtung der Haltevorrichtung (4) zuführen,
wobei das System **dadurch gekennzeichnet ist, dass** es so konfiguriert ist, dass es die mindestens eine primäre Zuführvorrichtung (18) und die mindestens eine sekundäre Zuführvorrichtung (20) symmetrisch zueinander bewegt und die mindestens eine primäre Zuführvorrichtung (18) und die mindestens eine sekundäre Zuführvorrichtung (20) entlang der Nicksachse (10) des Wickelträgers (6) in Bezug auf die Basis (16) bewegt.

9. System (2) nach Anspruch 8, wobei die Bewegung der mindestens einen primären Zuführvorrichtung (18) und der mindestens einen sekundären Zuführvorrichtung (20) symmetrisch zueinander in Bezug auf die Rollachse (8) des Wickelträgers (6) sind.

10. System (102) nach Anspruch 8, wobei die Bewegung der mindestens einen primären Zuführvorrichtung (18) und der mindestens einen sekundären Zuführvorrichtung (20) in Bezug auf einen Volumenmittelpunkt des Wickelträgers (6) symmetrisch zueinander sind.

11. System (202) nach Anspruch 8, wobei die Bewegung der mindestens einen primären Zuführvorrichtung (18) und der mindestens einen sekundären Zuführvorrichtung (20) symmetrisch zueinander in Bezug auf eine Ebene sind, die senkrecht zur Rollachse (8) des Wickelträgers (6) steht und durch den Volumenmittelpunkt des Wickelträgers (6) verläuft.

12. System (2; 102; 202) nach einem der Ansprüche 8 bis 11, aufweisend mehrere primäre Zuführvorrichtungen (18), die vorzugsweise regelmäßig um die Rollachse (8) des Wickelträgers (6) angeordnet sind, und mehrere sekundäre Zuführvorrichtungen (20), die vorzugsweise regelmäßig um die Rollachse (8) des Wickelträgers (6) angeordnet sind, wobei die Anzahl der primären Zuführvorrichtungen (18) gleich der Anzahl der sekundären Zuführvorrichtungen (20) ist.

13. System (2; 102; 202) nach einem der Ansprüche 8 bis 12, aufweisend eine Steuervorrichtung (26), die sowohl der Haltevorrichtung (4) als auch den Zuführvorrichtungen (18, 20) gemeinsam ist und konfiguriert ist, die Bewegungen der Haltevorrichtung (4), die Bewegung der Zuführvorrichtungen (18, 20) und die Aufnahmegeschwindigkeit des von den Zuführvorrichtungen (18, 20) zugeführten Filaments (22) synchron zu steuern.

14. System (2; 102; 202) nach einem der Ansprüche 8 bis 13, wobei die primäre und die sekundäre Zuführvorrichtung (18, 20) jeweils eine Filamentharz-Imprägnierungseinheit aufweisen.

15. Nicht-transitorisches, computerlesbares Medium, das Befehle aufweist, die, wenn sie von einem Prozessor ausgeführt werden, den Prozessor veranlassen, den Prozess gemäß einem der Ansprüche 1 bis 7 auszuführen.

## Revendications

1. Procédé d'enroulement d'un filament (22) autour d'un support d'enroulement (6) ayant une forme générale cylindrique avec des extrémités longitudinales en forme de dôme et ayant un axe de roulis (8), le support d'enroulement (6) étant maintenu par un dispositif de maintien (4) fixé sur une base (16), le procédé comprenant des étapes, se déroulant en synchronisation, consistant à :
(i) amener un filament (22), au moyen d'au moins un dispositif d'alimentation primaire (18) et d'au moins un dispositif d'alimentation secondaire (20), vers le support d'enroulement (6),
(ii) translater l'au moins un dispositif d'alimentation primaire (18) et l'au moins un dispositif d'alimentation secondaire (20) par rapport à la base (16) parallèlement à l'axe de roulis (8) du support d'enroulement (6),
(iii) faire tourner le support d'enroulement (6) autour de son axe de roulis (8) par rapport à la base (16),
(iv) déplacer l'au moins un dispositif d'alimentation primaire (18) et l'au moins un dispositif d'alimentation secondaire (20) le long de l'axe de tangage (10) du support d'enroulement (6) par rapport à la base (16),
dans lequel le mouvement de l'au moins un dispositif d'alimentation principal (18) et de l'au moins un dispositif d'alimentation secondaire (20) sont symétriques l'un de l'autre.

2. Procédé selon la revendication 1, dans lequel les mouvements de l'au moins un dispositif d'alimentation primaire (18) et de l'au moins un dispositif d'alimentation secondaire (20) sont symétriques l'un de l'autre par rapport à l'axe de roulis (8) du support d'enroulement (6).

3. Procédé selon la revendication 2, dans lequel au cours de l'étape (ii) l'au moins un dispositif d'alimentation primaire (18) et l'au moins un dispositif d'alimentation secondaire (20) sont translatés par rapport à la base (16) parallèlement à l'axe de roulis (8) du support d'enroulement (6) dans une direction primaire, et dans lequel le procédé comprend en outre une étape, se produisant en synchronisation avec les autres étapes, consistant à :
(v) translater le support d'enroulement (6) le long de son axe de roulis (8) par rapport à la base (16) dans une direction secondaire opposée à la direction principale.

4. Procédé selon la revendication 1, dans lequel les mouvements de l'au moins un dispositif d'alimentation primaire (18) et de l'au moins un dispositif d'alimentation secondaire (20) sont symétriques l'un de l'autre par rapport au centre volumique du support d'enroulement (16).

5. Procédé selon la revendication 1, dans lequel les mouvements de l'au moins un dispositif d'alimentation primaire (18) et de l'au moins un dispositif d'alimentation secondaire (20) sont symétriques l'un de l'autre par rapport à un plan perpendiculaire à l'axe de roulis (8) du support d'enroulement (6) et passant par le centre volumique du support d'enroulement (6).

6. Procédé selon l'une quelconque des revendications précédentes, comprenant plusieurs dispositifs d'alimentation primaires (18), de préférence disposés régulièrement autour de l'axe de roulis (8) du support d'enroulement (6), et plusieurs dispositifs d'alimentation secondaires (20), de préférence disposés régulièrement autour de l'axe de roulis (8) du support d'enroulement (6), le nombre de dispositifs d'alimentation primaires (18) étant égal au nombre de dispositifs d'alimentation secondaires (20).

7. Procédé de fabrication d'un réservoir sous pression, le procédé comprenant le procédé d'enroulement d'un filament autour d'un support d'enroulement selon l'une quelconque des revendications précédentes.

8. Système (2 ; 102 ; 202)) pour enrouler un filament (22) sur un support d'enroulement (6) ayant une forme générale cylindrique avec des extrémités longitudinales en forme de dôme et ayant un axe de roulis (8), le système comprenant :
- une base (16),
- un dispositif de maintien (4), relié à la base (16), configuré pour maintenir le support d'enroulement (6) de telle sorte que le support d'enroulement (6) puisse tourner autour de son axe de roulis (8) par rapport à la base (16) et puisse translater le long de son axe de roulis (8) par rapport à la base (16), et
- au moins un dispositif d'alimentation primaire (18) et au moins un dispositif d'alimentation secondaire (20) agencés pour amener un filament (22) vers le dispositif de maintien (4),
le système étant **caractérisé en ce qu'**il est configuré pour déplacer l'au moins un dispositif d'alimentation principal (18) et l'au moins un dispositif d'alimentation secondaire (20) en symétrie l'un de l'autre et pour déplacer l'au moins un dispositif d'alimentation primaire (18) et l'au moins un dispositif d'alimentation secondaire (20) le long de l'axe de tangage (10) du support d'enroulement (6) par rapport à la base (16).

9. Système (2) selon la revendication 8, dans lequel les mouvements de l'au moins un dispositif d'alimentation primaire (18) et de l'au moins un dispositif d'alimentation secondaire (20) sont symétriques l'un de l'autre par rapport à l'axe de roulis (8) du support d'enroulement (6).

10. Système (102) selon la revendication 8, dans lequel les mouvements de l'au moins un dispositif d'alimentation primaire (18) et de l'au moins un dispositif d'alimentation secondaire (20) sont symétriques l'un de l'autre par rapport au centre volumique du support d'enroulement (6).

11. Système (202) selon la revendication 8, dans lequel les mouvements de l'au moins un dispositif d'alimentation primaire (18) et de l'au moins un dispositif d'alimentation secondaire (20) sont symétriques l'un de l'autre par rapport à un plan perpendiculaire à l'axe de roulis (8) du support d'enroulement (6) et passant par le centre volumique du support d'enroulement (6).

12. Système (2 ; 102 ; 202)) selon l'une quelconque des revendications 8 à 11, comprenant plusieurs dispositifs d'alimentation primaire (18), de préférence régulièrement disposés autour de l'axe de roulis (8) du support d'enroulement (6), et plusieurs alimentations secondaires des dispositifs (20), de préférence disposés régulièrement autour de l'axe de roulis (8) du support d'enroulement (6), le nombre de dispositifs d'alimentation primaires (18) étant égal au nombre de dispositifs d'alimentation secondaires (20).

13. Système (2 ; 102 ; 202) selon l'une quelconque des revendications 8 à 12, comprenant un dispositif de commande (26), commun à la fois au dispositif de maintien (4) et aux dispositifs d'alimentation (18, 20), configuré pour commander, en synchronisation, les mouvements du dispositif de maintien (4), le déplacement des dispositifs d'alimentation (18, 20) et la vitesse d'enroulement du filament (22) qui est appliquée par les dispositifs d'alimentation (18, 20).

14. Système (2 ; 102 ; 202) selon l'une quelconque des revendications 8 à 13, dans lequel les dispositifs d'alimentation primaire et secondaire (18, 20) comprennent chacun une unité d'imprégnation en résine du filament.

15. Support non transitoire lisible par ordinateur comprenant des instructions qui, lorsqu'elles sont exécutées par un processeur, amènent le processeur à exécuter le procédé selon l'une quelconque des revendications 1 à 7.
